# EUROPEAN PATENT APPLICATION

(11) **EP 2 138 886 A2**
(43) Date of publication of application: **30.12.2009**
(21) Application number: 09163481.6
(22) Date of filing: 23.06.2009
(51) Int. Cl.: G02B 27/01, G02B 27/28, G02B 5/32

(54) **COMPACT VIRTUAL DISPLAY**

(30) Priority: 25.06.2008 RU 2008125493; 31.03.2009 KR 20090027758
(71) Applicant: Samsung Electronics Co., Ltd., Suwon-si, Gyeonggi-do 442-742 (KR)
(72) Inventor: Putilin, Andrej Nikolaevich, 109462, Moscow (RU); Bratishev, Aleksej Vladimirovich, Moscow (RU)
(74) Representative: Fearnside, Andrew Simon

(57) **Abstract**

A compact virtual display in which an image displayed on an image display device (10) is separated into a plurality of regions, selectively reflected in an image receiving optical system (O), and selectively transmitted in synchronization with the selective reflection of the image receiving optical system (3).

## Description

### CROSS-REFERENCE TO RELATED PATENT APPLICATION

This application claims priority from Russian Patent Application No. 2008-125493, filed on June 25, 2008, in the Russian Patent & Trademark Office, and Korean Patent Application No. 10-2009-0027758, filed on March 31, 2009, in the Korean Intellectual Property Office, the disclosures of which are incorporated herein in their entirety by reference.

### BACKGROUND OF THE INVENTION

### 1. Field of the Invention

The present invention relates to an optical device, and more particularly to a device for receiving an optically magnified image, for example, a compact virtual display that can be located on a user's head or helmet.

### 2. Description of the Related Art

Compact virtual displays display images by using lenses, prisms, light pipes, electronic tubes, liquid crystal matrices, and the like. Compact virtual displays can be located on the users' heads to display images, and are then referred to as head-mounted displays (HMDs).

HMDs may be monocular HMDs in that they can be located in front of one eye or binocular HMDs located in front of both eyes. HMDs may have a wide variety of applications, for example, operations with small objects during the assembling of electronic equipment, surgical operations, supervision services, targeting of remote objects, and game simulations.

Various technologies relating to compact virtual displays have been developed for the above-mentioned applications. For example, an optical device including an ocular optics system disclosed in U.S. Patent No. 5,790,311 is shown in FIG. 1. Referring to FIG. 1, the ocular optics system includes three juxtaposed optical surfaces 3, 4, and 5. A space defined by the three juxtaposed optical surfaces 3, 4, and 5 is filled with a transparent substance having a refraction coefficient greater than 1. At least the two juxtaposed optical surfaces 3 and 4 have a concave exit pupil 1. At least four reflections occur between the juxtaposed optical surfaces 3 and 4. The exit pupil 1 is aligned with an entrance pupil of an observer's eye, as shown. The ocular optics system 7 includes an observer's virtual axis 2 and an image source 6.

U.S. Patent No. 5,715,094 discloses a lens-less tiny optical apparatus including a fiber optic cover plate and a liquid crystal screen.

U.S. Patent No. 5,986,812 discloses an optical apparatus in which light incident on a first surface that serves as both transmitting and reflecting surfaces is reflected by a third surface and further reflected by the first surface. The light reflected on the first surface is reflected by a second surface and enters into an observer's eye through the first surface. The second surface is a decentered reflected surface disposed on an optical axis to face an exit pupil. The first through third surfaces are each formed from a plane-symmetric three-dimensional surface having no axis of rotational symmetry through the surface and having only one plane of symmetry.

### SUMMARY OF THE INVENTION

The above conventional inventions have similar problems. In more detail, to provide an acceptable dimension of a virtual image, a large numerical aperture is required, which leads to considerable enlargement of weight and size of the apparatuses, making them inconvenient for long-time usage. Also, none of the above conventional inventions have the ability to simultaneously observe a projected image and a real environment.

The present invention desirably provides a compact virtual display that provides capability of simultaneously observing a virtual image, i.e. a projected image, and a real environment.

The present invention also desirably provides a compact virtual display having small size, low weight, and significant durability.

According to the present invention there is provided an apparatus and method as set forth in the appended claims. Other features of the invention will be apparent from the dependent claims, and the description which follows.

According to an aspect of the present invention, there is provided a compact virtual display including: an image display device displaying an image; an image receiving optical system separating an image displayed on the image display device into a plurality of regions and sequentially reflecting the separated image; and an image transmitting optical system sequentially transmitting the image that is separated into the plurality of regions and which is sequentially reflected by the image receiving optical system in synchronization with the sequential reflection of the image receiving optical system.

The compact virtual display may further include a polarization converting system converting a polarization of light according to an electrical signal, the light being incident onto the image receiving optical system and traveling forward to the image transmitting optical system.

The image receiving optical system may include a plurality of polarizing reflecting prisms each having an incidence surface facing an image display surface of the image display device and selectively transmitting or reflecting the light according to a polarization of the light, wherein the polarization converting system comprises a plurality of polarization modulators disposed respectively at the emission surface sides of the plurality of polarizing reflecting prisms and changing a polarization of a passing light according to the electrical signal.

The image transmitting optical system may include a plurality of polarizing reflecting mirrors corresponding to the plurality of polarizing reflecting prisms, respectively, and selectively transmitting or reflecting the light according to a polarization of the light, wherein the polarization converting system comprises a plurality of polarization modulators disposed respectively at the incidence surface sides of the plurality of polarizing reflecting mirrors and changing a polarization of a passing light according to the electrical signal.

The plurality of polarizing reflecting mirrors may have aspherical surfaces which increase a viewing angle.

The plurality of polarization modulators disposed on the emission surfaces of the plurality of polarizing reflecting prisms and the plurality of polarization modulators disposed at the incidence surface side of the plurality of polarizing reflecting mirrors may be synchronized and driven in pairs.

The plurality of polarizing reflecting prisms and the plurality of polarizing reflecting mirrors may be aligned in the same axis.

An optical plate which is formed of a transparent material and guides light may be disposed between the image receiving optical system and the image transmitting optical system.

The image transmitting optical system may include a plurality of holographic focusing elements corresponding to the plurality of polarizing reflecting prisms, respectively, and selectively transmitting or reflecting the light according to a polarization of the light, wherein the polarization converting system comprises a plurality of polarization modulators disposed respectively on the incidence surfaces of the plurality of holographic focusing elements and changing a polarization of a passing light according to the electrical signal.

The image receiving optical system may include a plurality of active mirrors disposed in the same axis and transmitting or reflecting the light according to the electrical signal.

The image transmitting optical system may include a plurality of active mirrors disposed in the same axis as the plurality of active mirrors of the image receiving optical system and transmitting or reflecting the light according to the electrical signal.

The plurality of active mirrors of the image transmitting optical system may have aspherical reflection surfaces which increase a viewing angle.

The optical plate which is formed of the transparent material may be disposed between the plurality of active mirrors of the image receiving optical system and the plurality of active mirrors of the image transmitting optical system.

The image display device may comprise 2-dimensional (2D) aligned pixel cells.

The compact virtual display may further include an illumination optical system illuminating the image display device.

### BRIEF DESCRIPTION OF THE DRAWINGS

The above and other features and advantages of the present invention will become more apparent by describing in detail exemplary embodiments thereof with reference to the attached drawings in which:

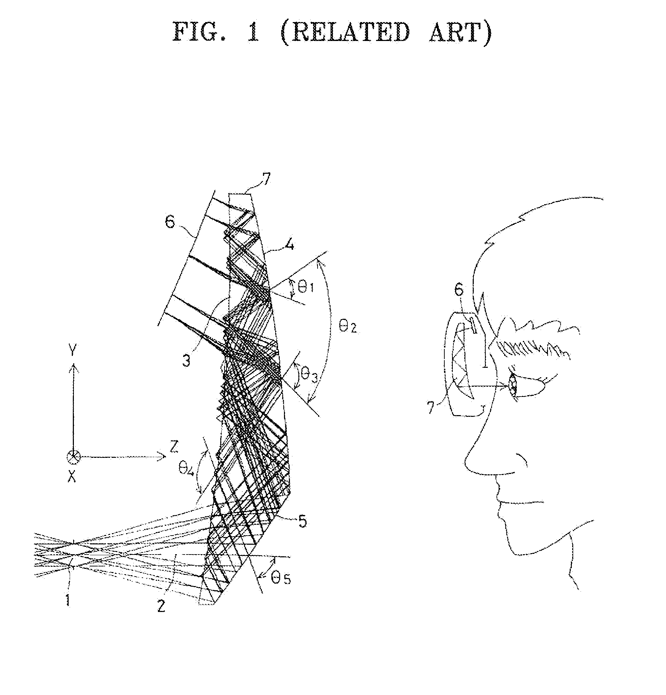

FIG. 1 is an illustration of a conventional compact virtual display;

FIG. 2 is an illustration of a compact virtual display according to an embodiment of the present invention;

FIG. 3 is a side cross-sectional view of the compact virtual display shown in FIG. 2;

FIGS. 4A and 4B are illustrations of the polarizing reflecting lenses employed in the compact virtual display shown in FIG. 2;

FIGS. 5A and 5B are additional illustrations of the polarizing reflecting lenses employed in the compact virtual display shown in FIG. 2; and

FIG. 6 is an illustration of a compact virtual display according to another embodiment of the present invention.

### DETAILED DESCRIPTION OF THE INVENTION

Reference will now be made in detail to example embodiments, examples of which are illustrated in the accompanying drawings. However, the invention is not limited to the embodiments illustrated and provided herein; the provided embodiments herein are introduced to provide an understanding of the spirit of the invention. Like reference numerals denote like elements throughout. In the drawings, the thicknesses of layers regions and scale may be exaggerated for clarity.

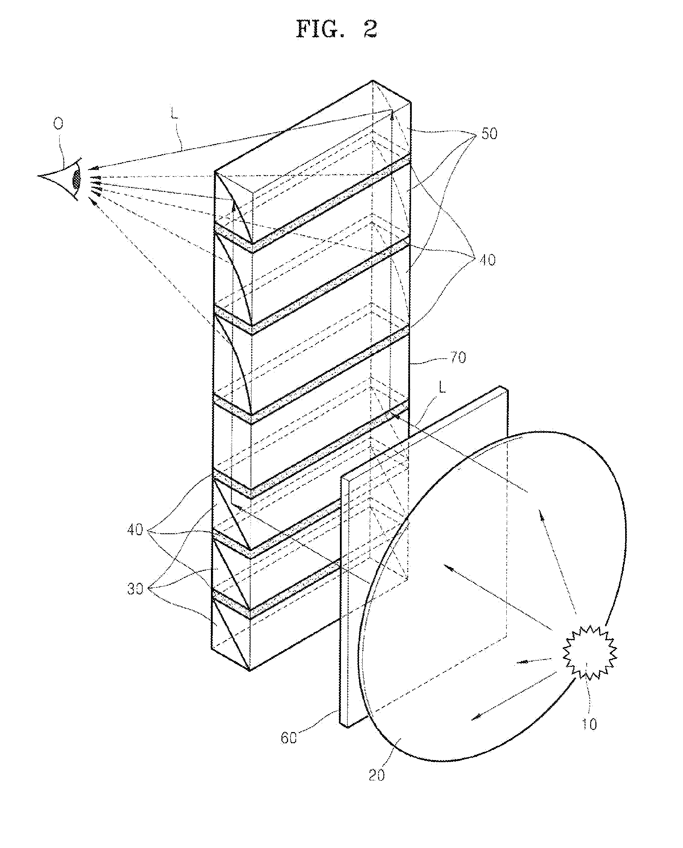

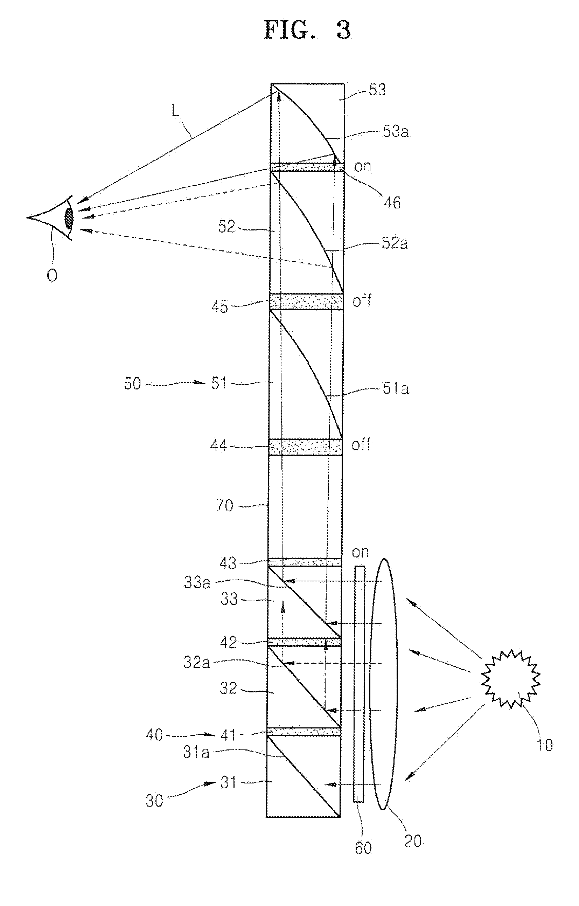

FIG. 2 is an illustration of a compact virtual display according to an embodiment of the present invention. FIG. 3 is a side cross-sectional view of the compact virtual display shown in FIG. 2.

Referring to FIGS. 2 and 3, the compact virtual display includes a light source 10, an illumination lens 20, an image receiving optical system 30, a polarization converting system 40, an image transmitting optical system 50, and an image display device 60.

The light source 10 may be a light emitting diode (LED), a small lamp, or other suitable source. The illumination lens 20 may be a collimating lens that collimates light L. The light source 10 and the illumination lens 20 provide the light L to the image display device 60.

The image display device 60, which displays an image, may be a micro display including a set of 2D aligned pixel cells, such as a liquid crystal display, an organic LED (OLED) display, a polymer LED (PLED) display, or other suitable device. If the image display device 60 itself can provide illumination, as in an OLED display or a PLED display, no illumination optical system may be needed.

The image receiving optical system 30, the polarization converting system 40, and the image transmitting optical system 50 are included in an ocular optics system that transfers the light L of an image displayed on the image display device 60 to an observer's eye.

The image receiving optical system 30 separates the light L of the image displayed on the image display device 60 into a plurality of regions and sequentially reflects the separated image, and may include first through third polarizing reflecting prisms 31, 32, and 33. The first through third polarizing reflecting prisms 31, 32, and 33 are aligned in an axial direction from an image display surface of the image display device 60. An incidence surface of each of the first through third polarizing reflecting prisms 31, 32, and 33 faces the image display surface of the image display device 60. The image displayed on the image display device 60 is incident after being separated to correspond to the first through third polarizing reflecting prisms 31, 32, and 33. Meanwhile, each of the first through third polarizing reflecting prisms 31, 32, and 33 reflects light having a predetermined polarization. In the present embodiment, the first through third polarizing reflecting prisms 31, 32, and 33 may reflect P-polarized light, and transmit through S-polarized light.

The image transmitting optical system 50 sequentially transmits the image that is separated into the regions and which is sequentially reflected by the image receiving optical system 30 in synchronization with the sequential reflection of the image receiving optical system 30, and may include first through third polarizing reflecting mirrors 51, 52, and 53. The first through third polarizing reflecting mirrors 51, 52, and 53 may be sequentially aligned in such a manner that a light axis of the first through third polarizing reflecting mirrors 51, 52, and 53 matches an axis across the first through third polarizing reflecting prisms 31, 32, and 33. The first through third polarizing reflecting mirrors 51, 52, and 53 correspond to the first through third polarizing reflecting prisms 31, 32, and 33, respectively, and sequentially reflect light according to the polarization converting system 40 as will be described later.

Respective mirror surfaces 51a, 52a, and 53a of the first through third polarizing reflecting mirrors 51, 52, and 53 are arranged so that the light of the image displayed on the image display device 60 faces the observer's eye. The respective mirror surfaces 51a, 52a, and 53a of the first through third polarizing reflecting mirrors 51, 52, and 53 are concave surfaces, which makes it possible for the observer O to observe a magnified image of the image displayed on the image display device 60. The respective mirror surfaces 51a, 52a, and 53a of the first through third polarizing reflecting mirrors 51, 52, and 53 are aspherical surfaces, which may increase a viewing angle.

Each of the first through third polarizing reflecting mirrors 51, 52, and 53 reflects light having a predetermined polarization. In the present embodiment, the first through third polarizing reflecting mirrors 51, 52, and 53 may reflect the P-polarized light, and transmit through the S-polarized light.

Although the first through third polarizing reflecting mirrors 51, 52, and 53 are included in the image transmitting optical system 50, the present invention is not limited thereto. For example, the image transmitting optical system 50 may employ holographic focusing elements having a diffraction pattern used to transmit through or reflect a polarized light, instead of the first through third polarizing reflecting mirrors 51, 52, and 53.

The polarization converting system 40 includes first through sixth polarization modulators 41 through 46 that electrically change a polarization direction of a passing light. The first through sixth polarization modulators 41 through 46 are disposed on the emission surfaces of the first through third polarizing reflecting prisms 31, 32, and 33 and on the incidence surfaces of the first through third polarizing reflecting mirrors 51, 52, and 53 to remove a crosstalk between the images that are incident onto the first through third polarizing reflecting prisms 31, 32, and 33. In the present embodiment, the first through sixth polarization modulators 41 through 46 convert the P-polarized light into the S-polarized light and the S-polarized light into the P-polarized light in an "ON" state, and do not perform conversion in an "OFF" state. The first through sixth polarization modulators 41 through 46 may employ liquid crystal devices which are aligned when power is applied thereto and use the birefringence characteristics of a liquid crystal having an optical axis. A liquid crystal device which changes a polarization of the light is well known to one of ordinary skill in the art and thus its detailed description is omitted.

A controller (not shown) synchronizes and controls the polarization converting system 40 and the image display device 60. That is, the first through third polarization modulators 41 through 43 and the fourth through sixth polarization modulators 44 through 46 are synchronized with the image display device 60 and may be driven in pairs.

The first through third polarizing reflecting prisms 31, 32, and 33 and the first through third polarizing reflecting mirrors 51, 52, and 53, between which the first through sixth polarization modulators 41 through 46 are disposed, may be sequentially stacked. In this regard, an optical plate 70 formed of a transparent material is disposed between the third and fourth polarization modulators 43 and 44 so that the ocular optics system may have an integral structure.

In the present embodiment, the image displayed on the image display device 60 is divided by the first through third polarizing reflecting prisms 31, 32, and 33, and the divided images are reflected by the first through third polarizing reflecting mirrors 51, 52, and 53, thereby greatly reducing the size of the ocular optics system. Although the image receiving optical system 30 of the present embodiment includes the first through third polarizing reflecting prisms 31, 32, and 33, the present invention is not limited thereto. The image receiving optical system 30 of the present embodiment may include at least two polarizing reflecting prisms.

The operation of the compact virtual display of the present embodiment will now be described.

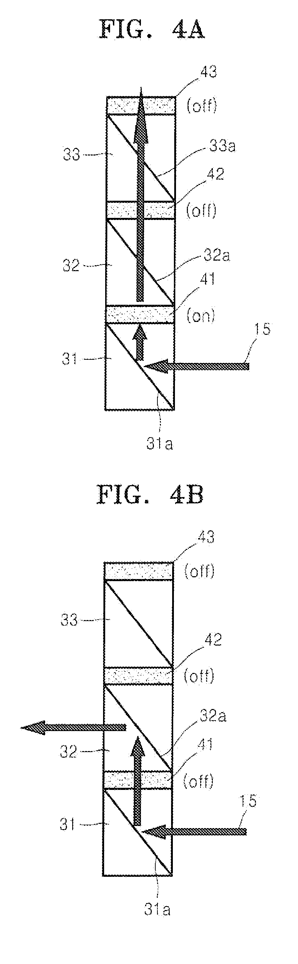

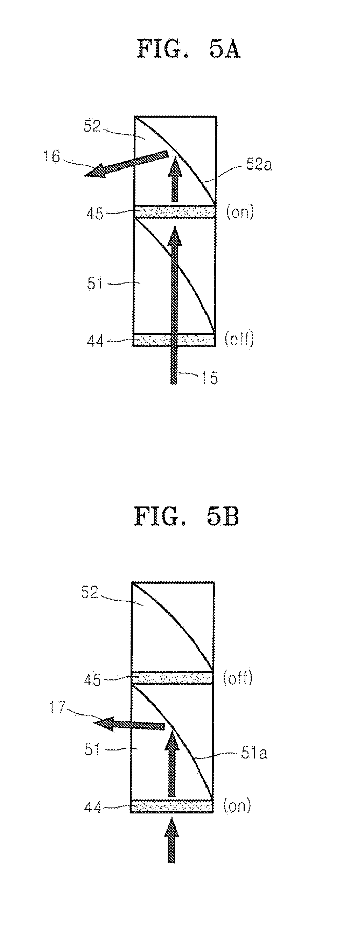

The operation of the ocular optics system will now be described in more detail with reference to FIGS. 4A, 4B, 5A, and 5B.

FIGS. 4A and 4B are views for explaining the operations of the first through third polarizing reflecting prisms 31, 32, and 33 and the first through third polarization modulators 41 through 43.

Referring to FIG. 4A, the first through third polarization modulators 41 through 43 are in "ON", "OFF", and "OFF" states, respectively. If a light 15 having a P-polarization is incident on the incidence surface of the first polarizing reflecting prism 31, the incident light 15 is reflected on a reflection surface 31a of the first polarizing reflecting prism 31 and faces the first polarization modulator 41. Even if a light 15 that is not polarized is incident onto the incidence surface of the first polarizing reflecting prism 31, the light 15 reflected on the reflection surface 31a of the first polarizing reflecting prism 31 has a P-polarization. Meanwhile, since the first polarization modulator 41 is in the "ON" state, the first polarization modulator 41 changes the polarization of the light 15 so that P-polarization is converted to an S-polarization. Next, the light 15 having the S-polarization transmits through a reflection surface 32a of the second polarizing reflecting prism 32 and a reflection surface 33a of the third polarizing reflecting prism 33. In this regard, since the second and third polarization modulators 42 and 43 are in the "OFF" state, the second and third polarization modulators 42 and 43 do not change the polarization of the light 15.

Referring to FIG. 4B, the first through third polarization modulators 41 through 43 are in an "OFF" state. The first polarization modulator 41 does not convert the polarization of the light 15 that is incident onto the first polarizing reflecting prism 31 and is reflected on the reflection surface 31a of the first polarizing reflecting prism 31. Thus, the light 15 having a P-polarization is incident onto the second polarizing reflecting prism 32 and is reflected on the reflection surface 32a of the second polarizing reflecting prism 32. As a result, the light incident onto the first polarizing reflecting prism 31 does not travel forward to the third polarizing reflecting prism 33.

The fourth through sixth polarization modulators 44 through 46 and the first through third polarizing reflecting mirrors 51, 52, and 53 operate in a similar manner.

FIGS. 5A and 5B are views for explaining the operations of the fourth and fifth polarization modulators 44 and 45 and the first and second polarizing reflecting mirrors 51 and 52.

Referring to FIG. 5A, the fourth and fifth polarization modulators 44 and 45 are in "OFF" and "ON" states, respectively. A light 15 having a S-polarization transmits through the first polarizing reflecting mirror 51 once through the fourth polarization modulator 44. The fifth polarization modulator 45 changes the polarization of the light 15 so that the S-polarization is converted to a P-polarization. The light 15 having the P-polarization is reflected on a mirror surface 52a of the second polarizing reflecting mirror 52. A light 16 reflected on the mirror surface 52a of the second polarizing reflecting mirror 52 forms an image on an observer's eye.

Referring to FIG. 5B, the fourth and fifth polarization modulators 44 and 45 are in the "ON" and "OFF" states, respectively. The fourth polarization modulator 44 changes the polarization of the light so that the S-polarization is converted to a P-polarization. The light having the P-polarization is reflected on a mirror surface 51a of the first polarizing reflecting mirror 51. A light 17 reflected on the mirror surface 51a of the first polarizing reflecting mirror 51 forms an image on the observer's eye.

As described above, a light travel path may differ according to whether the first through sixth polarization modulators 41 through 46 are driven.

Referring again to FIGS. 2 and 3, the light L emitted from the light source 10 is illuminated on the image display device 60 through the illumination lens 20. The image display device 60 displays an image that is included in the light L that has transmitted through the image display device 60. The light L including the image displayed on the image display device 60 travels forward to the observer's eye through the ocular optics system.

The image display device 60 scans image data in a perpendicular direction and sequentially displays images in a perpendicular direction. The first through third polarization modulators 41 through 43 and the fourth through sixth polarization modulators 44 through 46 are synchronized with the image display device 60 and are driven in pairs. If an image of a region corresponding to the third polarizing reflecting prism 33 is displayed on the image display device 60, the first, second, fourth, and fifth polarization modulators 41, 42, 44, and 45 are in the "OFF" state, and the third and sixth polarization modulators 43 and 46 are in the "ON" state, so that the image of the region corresponding to the third polarizing reflecting prism 33 is reflected on the third polarizing reflecting prism 33 and the third polarizing reflecting mirror 53 and travels forward to the observer's eye. The image display device 60 and the polarization converting system 40 are synchronized and driven so that the images which are sequentially displayed on the image display device 60 are sent to the observer's eye, which makes it possible for the observer O to view information about a magnified virtual image displayed on the image display device 60. Also, although the images displayed on the image display device 60 are divided and pass through the ocular optics system, a polarization of the light is used to prevent crosstalk from occurring.

The compact virtual display of the present embodiment can view an external real environment, in addition to the images displayed on the image display device 60. If an externally open window (not shown) is disposed on the front surface of the image transmitting optical system 50, an external light having a S-polarization travels to the observer's eye through the first through third polarizing reflecting mirrors 51, 52, and 53. Therefore, the observer O can view the images displayed on the image display device 60 as occasion demands, view only the external real environment, or simultaneously view the images and the external real environment.

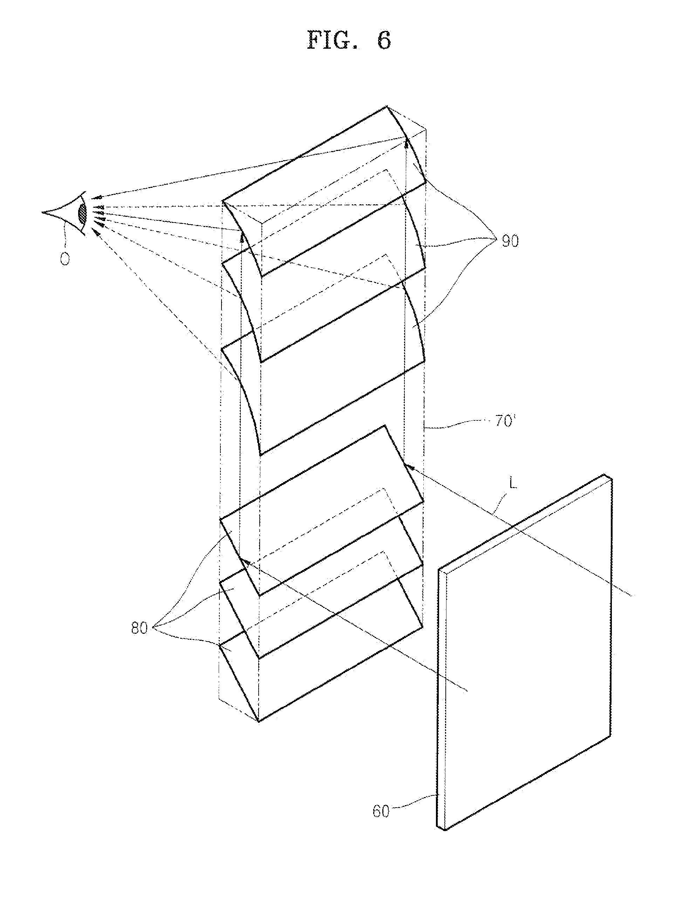

FIG. 6 is an illustration of a compact virtual display according to another embodiment of the present invention. Referring to FIG. 6, the compact virtual display includes the image display device 60 and an ocular optics system.

The ocular optics system includes an image receiving optical system 80, an image transmitting optical system 90, and an optical plate 70' disposed between the image receiving optical system 80 and the image transmitting optical system 90.

The optical plate 70', which acts a waveguide for guiding light, may be formed of a transparent material.

The image receiving optical system 80 and the image transmitting optical system 90 include active mirrors, which are actively switched electrical-optical devices that reflect or transmit light according to an electrical signal. An active mirror included in the image receiving optical system 80 has a plane type reflection surface to reflect or transmit through the light. The active mirror included in the image transmitting optical system 90 has a concave curved reflection surface so that the observer O views a magnified image.

The present embodiment includes electrical-optical devices that act as reflection surfaces which are turned on and off instead of the image receiving optical system 30, the polarization converting system 40, and the image transmitting optical system 50.

The compact virtual displays of the above embodiments may be located on a users' eyeglasses or helmet and applied to head-mounted displays (HMDs).

While the present invention has been particularly shown and described with reference to exemplary embodiments thereof, it will be understood by those of ordinary skill in the art that various changes in form and details may be made therein without departing from the scope of the present invention as defined by the following claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A compact virtual display comprising:
an image display device that displays an image
an image receiving optical system that separates the image displayed on the image display device into a plurality of regions and sequentially reflects the separated image; and
an image transmitting optical system that sequentially transmits the separated image that is sequentially reflected by the image receiving optical system in synchronization with the sequential reflection of the image receiving optical system.

2. The compact virtual display of claim 1, further comprising: a polarization converting system that converts a polarization of light according to an electrical signal, the light being incident onto the image receiving optical system and traveling to the image transmitting optical system.

3. The compact virtual display of claim 2, wherein the image receiving optical system comprises: a plurality of polarizing reflecting prisms each having an incidence surface facing an image display surface of the image display device and selectively transmitting or reflecting the light according to a polarization of the light, and
wherein the polarization converting system comprises a plurality of polarization modulators disposed respectively at emission surface sides of the plurality of polarizing reflecting prisms and that changes a polarization of a passing light according to the electrical signal.

4. The compact virtual display of claim 3, wherein the image transmitting optical system comprises a plurality of polarizing reflecting mirrors that correspond to the plurality of polarizing reflecting prisms, respectively, and selectively transmit or reflect the light according to a polarization of the light, and
wherein the polarization converting system further comprises: a plurality of polarization modulators disposed respectively at the incidence surface sides of the plurality of polarizing reflecting mirrors and that changes a polarization of a passing light according to the electrical signal.

5. The compact virtual display of claim 4, wherein the plurality of polarizing reflecting mirrors have aspherical surfaces.

6. The compact virtual display of claim 4 or 5, wherein the plurality of polarization modulators disposed on the emission surfaces of the plurality of polarizing reflecting prisms and the plurality of polarization modulators disposed at the incidence surface side of the plurality of polarizing reflecting mirrors are synchronized and driven in pairs.

7. The compact virtual display of one of claims 4 through 6, wherein the plurality of polarizing reflecting prisms and the plurality of polarizing reflecting mirrors are aligned in the same axis.

8. The compact virtual display of one of claims 4 through 7, wherein an optical plate which is formed of a transparent material and guides light is disposed between the image receiving optical system and the image transmitting optical system.

9. The compact virtual display of claim 3, wherein the image transmitting optical system comprises: a plurality of holographic focusing elements that correspond to the plurality of polarizing reflecting prisms, respectively, and selectively transmit or reflect the light according to a polarization of the light, and
wherein the polarization converting system further comprises: a plurality of polarization modulators disposed respectively at the incidence surfaces of the plurality of holographic focusing elements and that change a polarization of a passing light according to the electrical signal.

10. The compact virtual display of one of claims 1 through 9, wherein the image receiving optical system comprises a plurality of active mirrors disposed in the same axis and that transmit or reflect the light according to the electrical signal.

11. The compact virtual display of claim 10, wherein the image transmitting optical system comprises a plurality of active mirrors disposed in the same axis as the plurality of active mirrors of the image receiving optical system and that transmit or reflect the light according to the electrical signal.

12. The compact virtual display of claim 11, wherein the plurality of active mirrors of the image transmitting optical system have aspherical reflection surfaces.

13. The compact virtual display of claim 11, wherein an optical plate formed of transparent material is disposed between the plurality of active mirrors of the image receiving optical system and the plurality of active mirrors of the image transmitting optical system.

14. The compact virtual display of one of claims 1 through 13, wherein the image display device comprises 2-dimensional (2D) aligned pixel cells.

15. The compact virtual display of one of claims 1 through 14, further comprising: an illumination optical system illuminating the image display device.
